(19) Europäisches Patentamt
European Patent Office
Office européen des brevets

(11) Numéro de publication: **0 118 332**
**B1**

(12) # FASCICULE DE BREVET EUROPÉEN

(45) Date de publication du fascicule du brevet: **08.04.87**

(51) Int. Cl.⁴: **C 04 B 24/26**, E 21 B 33/13, C 08 F 228/02, C 08 F 226/02

(21) Numéro de dépôt: **84400185.9**

(22) Date de dépôt: **27.01.84**

(54) **Additif de contrôle du filtrat pour compositions de ciment, procédé de préparation, compositions de ciment contenant cet additif, et procédé de cimentation de puits correspondant.**

(30) Priorité: **28.01.83 FR 8301369**

(43) Date de publication de la demande: **12.09.84 Bulletin 84/37**

(45) Mention de la délivrance du brevet: **08.04.87 Bulletin 87/15**

(84) Etats contractants désignés: **DE GB IT NL**

(56) Documents cité:
**FR-A-2 195 644**
**US-A-4 048 077**
**US-A-4 258 790**

(73) Titulaire: **Etudes et Fabrication Dowell Schlumberger, 8, rue Bellini, F-75782 Paris Cedex 16 (FR)**

(72) Inventeur: **Defosse, Camille, 12 Domaine Poyeton, F-42650 St. Jean Bonnefonds (FR)**

**EP 0 118 332 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention concerne des compositions de cimentation et leur utilisation dans les opérations de cimentation, en particulier pour cimenter des puits traversant des formations souterraines.

Plus précisément, la présente invention concerne des additifs pour compositions de cimentation utilisées pour la cimentation de puits pétroliers et de puits de gaz, dans le but de réduire le filtrat (FL) du laitier de ciment vers les formations souterraines traversées.

On sait que des laitiers de ciment nets contenant seulement un ciment hydraulique et de l'eau de mélange sont soumis à un taux de filtrat élevé lorsque ces laitiers entrent en contact avec des formations perméables. Dans de tels cas, il est nécessaire d'utiliser un agent de contrôle du filtrat pour compositions de ciment, afin de limiter la perte de l'eau intersticielle du laitier dans et au travers des porosités de la formation. Des exemples d'art antérieur concernant ce sujet et décrivant les deux principales classes chimiques d'agents de contrôle du filtrat pour compositions de ciment connus sont les brevets des EUA Nos 3 234 154, 3 483 007, 3 491 049 et 4 258 790.

Les agents de contrôle du filtrat pour compositions de ciment (désignés par "FLAC") couramment utilisés de nos jours peuvent en effet être divisés en deux classes différentes principales présentant des caractéristiques nettement différentes. La première classe consiste en agents de contrôle à base de cellulose, par exemple hydroxyéthylcellulose ou carboxyméthylcellulose. Ce sont des produits solides et qui sont donc difficiles à manipuler dans les opérations en mer ("Offshore"). De plus, ils ont tendance à augmenter de manière appréciable la viscosité du laitier, ce qui empêche son déplacement dans des conditions d'écoulement turbulent. La seconde classe comprend des polymères tels que polyéthylèneimine et les polyamines en général. Ce sont des liquides, qui donnent des laitiers très "coulables", et ces deux avantages les rendent attrayants pour l'homme du métier. Cependant, ils présentent un inconvénient sérieux qui réside dans leur tendance à présenter des problèmes de compatibilité avec la plupart des autres additifs pour ciment tels que les dispersants et les retardateurs, en raison de leur nature cationique. Ainsi, il existe actuellement un besoin urgent pour un FLAC "toutes utilisations" qui combinerait de manière idéale les avantages des deux classes d'additifs connus, sans présenter leurs inconvénients respectifs. En d'autres termes, un FLAC idéal devrait donner des laitiers très "coulables", cependant sans poser de problèmes de compatibilité. Il serait également nécessaire de formuler cet additif sous forme d'un liquide.

La présente invention propose pour la première fois un FLAC amélioré présentant toutes ces caractéristiques.

Le brevet des EUA 4 048 077 décrit des terpolymères qui sont utiles dans le domaine des boues de forage.

Le brevet des EUA 4 048 077 décrit une classe de terpolymères constitués des fractions monomères suivantes:

I.

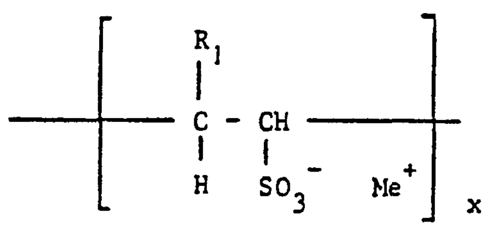

II.

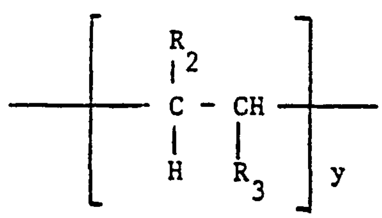

III.

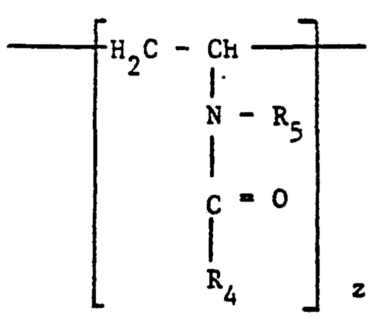

Dans ces formules, $R_1$ et $R_2$ représentent H ou $CH_3$, $R_3$ représente $CONH_2$, CN ou $COOCH_3$, $R_4$ représente H, $CH_3$ ou $C_2H_5$, et $R_5$ représente $CH_3$ ou $C_2H_5$, ou bien $R_4$ et $R_5$ forment ensemble un groupe propylène formant avec le groupe NCO un radical pyrrolidone, le cation de compensation de la charge $Me^+$ étant choisi parmi $NH_4^+$, $K^+$, $Na^+$ ou $Li^+$ et les parties en poids des monomères de départ, x, y, et z respectivement pour les formules I, II et III sont respectivement comprises entre 5 et 50, 25 et 92, et 3 et 70.

Cette famille de terpolymères décrite dans le brevet des EUA n°4 048 077 est utile comme agent de contrôle du filtrat pour les boues de forage, mais ne convient absolument pas comme agent de contrôle du filtrat pour les compositions de ciment.

Il a été découvert selon l'invention que cette famille de terpolymères pouvait conduire à des agents de contrôle du filtrat pour compositions de ciment, présentant de surcroit des propriétés en faisant un FLAC très supérieur à ceux actuellement connus, si l'on traite les terpolymères en question d'une manière relativement simple qui sera décrite ci-dessous.

Le traitement selon l'invention consiste en un traitement thermique d'au moins un terpolymère se présentant sous forme d'une solution aqueuse, et ce en présence d'au moins un acide dans les conditions qui seront precisées ci dessous. Le terpolymère traité thermiquement et par l'acide (plus brièvement ci-après "AHTT") ainsi obtenu présente la caractéristique originale de permettre un excellent contrôle du filtrat de laitiers de ciment, cependant sans présenter aucun des inconvéients classiques de tels additifs, par exemple, apparition d'une quantité importante d'eau libre et/ou détérioration inacceptable des caractéristiques rhéologiques.

Rien ne laissait prévoir dans l'état de la technique qu'un tel traitement combinant la chaleur et l'action d'un acide permettrait d'utiliser les produits obtenus comme FLAC.

Le traitement thermique est caractérisé par trois paramètres qui sont sa durée, la température à laquelle il est effectué et la concentration de l'acide.

L'influence de la durée et de la température du traitement thermique sur l'efficacité du AHTT comme FLAC a été recherchée. Pour cela, la poudre de terpolymère de départ (pour tous les exemples: produit HOECHST "HOSTADRILL 2825") est dissoute dans l'eau, et on ajoute de l'acide chlorhydrique 3,0 N pour obtenir une solution finale à 20 % en poids de polymère sec. On chauffe ensuite cette solution à 60 ou 100°C dans un réacteur fermé, durant des périodes croissantes. A la fin de chaque période, une partie de la solution est prélevée et subit des essais d'efficacité en tant que FLAC.

La préparation du laitier et la détermination de ses caractéristiques de filtrat et d'eau libre sont conduites selon la norme API 10. Les paramètres rhéologiques, c'est-à-dire la viscosité plastique (PV) et le seuil de cisaillement (YV) sont déterminés de manière semblable selon la même norme par la méthode des moindres carrés à l'aide des lectures opérées sur un viscosimètre FANN à 600, 300, 200 et 100 tours/minute, en utilisant le modèle plastique de BINGHAM pour décrire la rhéologie du laitier de ciment.

On ne peut pas obtenir sur un laitier un bon contrôle du filtrat si le ciment n'est pas tout d'abord totalement dispersé sous forme de ses particules élémentaires. Cet état de dispersion est facilement obtenu par application d'une certaine contrainte de cisaillement mécanique (au laboratoire, par exemple au moyen d'un mélangeur WARRING) audit laitier contenant un agent dispersant dénommé également superplastifiant. Le dispersant utilisé pour tous les essais relatés dans la présente demande est un produit commercialisé par la Société DOWELL-SCHLUMBERGER sous le nom TIC DS 80 et qui consiste en le sel de sodium du produit de condensation de formaldéhyde et de naphtalène sulfoné.

Le Tableau I ci-après présente les résultats d'essais effectués à 85°C en utilisant de l'eau douce, un ciment DYCKERHOFF classe G, de type tropical, 17,76 litres/tonne de ciment de dispersant DS 80 et 29,3 litres/tonne de ciment de solution de AHTT. Il est clair d'après ce tableau I que l'on n'obtient aucun contrôle du filtrat du laitier lorsque la solution de terpolymère est traitée thermiquement mais sans acide, quelle que soit la durée de ce traitement thermique. Au contraire, si l'on ajoute avant le chauffage 1,5 milliéquivalents (meq) HCl/g de polymère sec à la solution de terpolymère, on obtient un excellent contrôle du filtrat après 8 jours de chauffage à la température modérée de 60°C. Simultanément, on remarque qu'il ne s'est pas développé d'eau libre et que les ceractéristiques rhéologiques sont excellentes.

A cette température de 85°C, l'homme du métier sait qu'une valeur d'environ 300, en ce qui concerne le filtrat, reflète un contrôle négligeable de ce filtrat.

Le Tableau II présente des résultats plus détaillés obtenus avec un autre ciment, le ciment CEMOIL. Les observations relatives au Tableau I en ce qui concerne le filtrat, l'eau libre et les caractéristiques rhéologiques sont également valables pour le Tableau II. De manière plus précise, le Tableau II montre qu'un chauffage de quelques heures (entre 2 et 4) à 100°C en présence d'un acide est suffisant pour transformer le terpolymère de départ en un FLAC très efficace et présentant un remarquable ensemble de propriétés. On notera également que la quantité de AHTT necessaire ne s'élève qu'à environ 0,65 % par poids de ciment, en poids sec.

En pratique, le traitement thermique pourra être de 60 à 200°C, de préference 100°C, durant 1 heure à 2 semaines, de préference de 4 à 8 heures à 100°C.

Afin de déterminer l'influence de la quantité et de la nature de l'acide utilisé pour traiter la solution de terpolymère, on a préparé plusieurs de ces solutions présentant toutes la même teneur finale de 20 % en poids de terpolymère. L'acide ajouté avant le traitement thermique est soit HCl, soit $H_2SO_4$ et la concentration utilisée pour les essais est comprise entre environ 0,1 et 4,5 meq/g de terpolymère sec. On pourra cependant dépasser la proportion de 4,5 meq/g de terpolymère sec, mais il sera alors dans la plupart des cas nécessaire de neutraliser l'additif selon l'invention ainsi obtenu, afin que son caractère acide ne retarde pas trop la prise du ciment. Dans les essais considérés, la température et la durée du traitement thermique sont fixes et égales

à respectivement 60°C et 7 jours. Les conditions d'essais permettant de déterminer l'eau libre, le filtrat et la rhéologie sont celles précisées ci-dessus.

L'homme du métier sait qu'à 85°C, une valeur de filtrat de 100 est considérée comme bonne. Une valeur de 32 telle que celle rencontrée dans les essais effectués sur l'additif selon l'invention est exceptionnelle, d'autant plus qu'elle s'accompagne d'excellentes caractéristiques de rhéologie et d'eau libre.

Le Tableau III présente les résultats obtenus avec un ciment DYCKERHOFF lorsque l'on fait varier la concentration en acide chlorhydrique. On voit que l'amélioration de l'efficacité de la solution de AHTT comme FLAC augmente avec la quantité d'acide chlorhydrique ajoutée, dans la plage de concentration ayant fait l'objet des essais. De plus, il ne se développe pas d'eau libre, et la rhéologie du laitier n'est pratiquement pas affectée, quelle que soit la quantité d'acide ajoutée.

En pratique, on pourra utiliser d'environ 0,10 à environ 5,0 meq d'acide/g de terpolymère sec. Une valeur optimale se situe aux alentours de 1,5 meq/g.

Les résultats présentés dans le Tableau IV ont été obtenus en utilisant un ciment CEMOIL. Toutes les autres conditions restent identiques à celles du Tableau précédent, sauf en ce que l'on utilise des solutions de AHTT traitées par HCl d'une part, ou traitées par $H_2SO_4$ d'autre part. En outre, dans quelques cas, l'acidité de l'eau de mélange résultant de l'addition de la solution de AHTT a été post-neutralisée à pH 7 avant d'ajouter le ciment. Les résultats obtenus montrent clairement que la post-neutralisation n'a pas d'effet sur les propriétés du laitier et que l'acide chlorhydrique se révèle être plus efficace que $H_2SO_4$ pour transformer la solution de terpolymère de départ en un FLAC tout à fait intéressant.

On a ensuite préparé des compositions typiques de laitier contenant la solution de AHTT selon l'invention.

On a fait varier les conditions d'essais pour la mesure des propriétés du laitier. Dans le Tableau V, on a maintenu la température à 85°C mais on a incorporé des retardateurs typiques dans les formulations de laitier, toutes les autres conditions d'essais étant semblables à celles du Tableau III. La solution de terpolymère traitée à 60°C par 1,5 meq HCl/g de terpolymère sec a été utilisée. Les retardateurs sont du type lignosulfonate ou glucoheptonate. Les résultats montrent que les retardateurs n'affectent pas de manière notable les propriétés du laitier, quel que soit le type de retardateur utilisé. Plus particulièrement, le contrôle du filtrat reste excellent grâce à l'additif selon l'invention, et les caractéristiques rhéologiques ne sont pas affectées.

Le Tableau VI présente d'autre part les résultats obtenus à 29,4°C, toutes les autres conditions étant identiques à celles décrites ci-dessus pour le Tableau V. Les résultats du Tableau VI montrent que l'on peut maintenir le filtrat à un faible niveau en utilisant une concentration en l'additif selon l'invention aussi faible que 7,10 litres/tonne de ciment, c'est-à-dire environ 0,15 % par poids de ciment de terpolymère sec. En outre, l'eau libre est inexistante et les paramètres rhéologiques sont tels que l'on pourra obtenir facilement un écoulement turbulent. On pourra utiliser en pratique d'environ 0,05 à environ 2 % par poids de ciment de AHTT (en poids sec) de préférence d'environ 0,1 à 1 %.

L'emploi comme FLAC de la solution de AHTT a été étendu à des systèmes tels que ceux préparés avec l'eau de mer ou avec une eau salinisée. On sait que dans un tel cas d'eau de mélange il est beaucoup plus difficile de contrôler le filtrat qu'avec de l'eau douce. Des valeurs de filtrat de l'ordre de 150 sont, à la température considérée, regardées comme normales. On a déterminé l'efficacité comme FLAC de la solution de AHTT pour diverses formulations de laitier typiques qui sont indiquées dans le Tableau VII ci-après, ainsi que les résultats obtenus. Pour les systèmes utilisant l'eau de mer, toutes les propriétés du laitier, y compris le filtrat, sont excellentes à environ 0,65 % par poids de ciment de terpolymère sec. En ce qui concerne les systèmes salins, on peut obtenir un contrôle de filtrat étonnamment bon dans le même domaine de concentration en AHTT, tandis que les caractéristiques rhéologiques sont typiques des valeurs moyennes que l'on peut espérer atteindre avec de tels systèmes, notamment lorsque l'eau est saturée (36 % de NaCl).

Enfin, les résultats rassemblés dans le Tableau VIII montrent que la solution de AHTT n'a qu'un effet modéré de retardement de la prise du ciment, que cette solution soit acide ou bien post-neutralisée.

Bien entendu, les compositions comportant l'additif selon l'invention pourront contenir les autres additifs classiques dans le domaine de la cimentation des puits, tels que retardateurs, accélérateurs, dispersants, agents anti-mousse, diluants et analogues.

Les solutions de terpolymère de départ seront en pratique à environ 5-40 %, de préférence 20 % en poids, de terpolymère sec.

**Tableau I**

Influence de la durée et de la température du traitement thermique de la solution de terpolymère à 20% sur l'efficacité de celle-ci comme agent de contrôle du filtrat pour ciment (FLAC).

Essais effectués à 85° C en utilisant de l'eau douce (44% par poids du ciment moins les additifs liquides), 29,3 l/t de ciment de la solution de terpolymère et 17,76 l/t de ciment de dispersant DS 80 selon les normes API 10.

Le ciment utilisé est un ciment DYCKERHOFF classe G de type tropical.

| HCl ++ | Traitement thermique T (°C) | Traitement thermique Durée (h) | Filtrat (ml/30 min) | Eau libre (ml/150 ml) | Rhéologie P.V. (cP) | Rhéologie Y.V. (g/100 cm$^2$) |
|---|---|---|---|---|---|---|
| 0 | 100 | 1 | 239 | | | |
| | | 4 | 215 | | | |
| | | 8 | 206 | | | |
| 1,5 | 60 | 192 | 44 | 0 | 43 | 0,976 |
| | | 288 | 44 | - | - | - |
| | 100 + | 1 | 46 | 0 | 41 | 1,02 |

\+ On a utilisé l'additif traité durant 96 h à 60° C.

\+ + Quantité de HCl présente dans la solution de terpolymère en meq/g de terpolymère sec

P.V. viscosité plastique

Y.V. seuil de cisaillement

**Tableau II**

Influence de la durée et de la température de traitement thermique de la solution de terpolymère à 20% sur l'efficacité de celle-ci comme agent de contrôle du filtrat pour ciment (FLAC).

Essais effectués à 85° C en utilisant de l'eau douce (44% par poids du ciment moins les additifs liquides) 29,3 l/t de ciment de la solution de terpolymère et 17,76 l/t de ciment de dispersant DS 80, selon les normes API 10.

Le ciment utilisé est un ciment CEMOIL classe G.

| HCl ++ | Traitement thermique T (°C) | Traitement thermique Durée (h) | Filtrat (ml/30 min) | Eau libre (ml/150 ml) | Rhéologie P.V. (cP) | Rhéologie Y.V. (g/100 cm$^2$) |
|---|---|---|---|---|---|---|
| 0 | 100 | 0 | 353 | 0 | 30 | 1,37 |
| | | 1 | 335 | 0 | 31 | 1,27 |
| | | 4 | 282 | 0 | 32 | 1,32 |
| | | 8 | 313 | 0 | - | - |
| 1,5 | 60 | 0 | 353 | 0 | 30 | 1,37 |
| | | 24 | 228 | 0 | 33 | 0,73 |
| | | 96 | 158 | - | - | - |
| | | 120 | 106 | - | - | - |
| | | 192 | 74 | 0 | 45 | 1,12 |
| | | 288 | 32 | 0 | - | - |
| | 100 | 0 | 158 | - | - | - |
| | | 1 | 70 | 0 | 38 | 0,54 |
| | + | 4 | 50 | - | 39 | 0,049 |
| | | 8 | 36 | 0 | 41 | 0,73 |

\+ On a utilisé l'additif traité durant 96 h à 60° C

\+ + Quantité de HCl présente dans la solution de terpolymère, en meq/g de terpolymère sec.

P.V. Viscosité plastique

Y.V. Seuil de cisaillement

**Tableau III**

Influence de la quantité d'acide ajoutée pour le traitement thermique sur l'efficacité de la solution à 20 % de terpolymère comme FLAC.

L'acide est HCl, la température et la durée du traitement sont respectivement de 60° C et 168 h.

Essais effectués à 85° C en utilisant de l'eau douce (44% par poids de ciment moins les additifs liquides) et du ciment DYCKERHOFF classe G de type tropical, selon les normes API 10.

| Acide + | Concentration Terpolymère (solution à 20%) (1/t) | DS 80 (1/t) | Filtrat (ml/30 min) | Eau libre (ml/150 ml) | Rhéologie P.V. (cP) | Y.V. ($g/100\ cm^2$) |
|---|---|---|---|---|---|---|
| 0,08 | 14,7 | 8,88 | 231 | 1 | | |
| 0,61 | 14,7 | 8,88 | 140 | 1 | 22 | 0,049 |
| | 29,3 | 11,1 | 52 | 1 | | |
| | 44,4 | 8,88 | 68 | 1 | | |
| 1,06 | 29,3 | 11,1 | 62 | 0 | 37 | 0,683 |
| 1,21 | 29,3 | 11,1 | 56 | | | |
| 1,50 | 14,7 | 8,88 | 110 | 0,5 | 23 | 0 |
| | 29,3 | 11,1 | 55 | 1 | | |
| | 44,4 | 8,88 | 46 | 0 | | |
| 4,55 | 14,7 | 8,88 | 78 | 1 | 24 | 0,63 |
| | 44,4 | 8,88 | 32 | 0 | | |

\+ Quantité de HCl présente dans la solution de terpolymère en meq/g de terpolymère sec.

**Tableau IV**

Influence de la nature de l'acide utilisé et de la post-neutralisation de la solution de terpolymère sur l'efficacité de celle-ci comme FLAC.

La température et la durée du traitement thermique sont respectivement de 60° C et 168 h.

Essais effectués à 85° C en utilisant de l'eau douce (44% par poids de ciment moins les additifs liquides) et un ciment GEMOIL classe G selon les normes API 10.

| Concentrations DS80 (1/t) | Terpolymère (solution à 20%) (1/t) | Acide Nature | Quantité + | Filtrat (ml/30min) | Eau libre (ml/150 ml) | Rhéologie P.V. (cP) | Y.V. ($g/100\ cm^2$) | (1) ++ |
|---|---|---|---|---|---|---|---|---|
| 17,76 | 14,7 | HCl | 0,61 | 231 | 0 | 23 | 2,39 | non |
| | | | 1,50 | 155 | 0 | 23 | 1,27 | non |
| | | | 1,50 | 185 | 0 | | | oui |
| | | $H_2SO_4$ | 0,61 | 205 | 0 | | | non |
| | | | 1,50 | 198 | 0 | | | non |
| 17,76 | 29,3 | HCl | 0,61 | 250 | 0,5 | 28 | 0,976 | non |
| | | | 1,50 | 68 | 0 | 33 | 1,32 | non |
| | | | 1,50 | 68 | 0 | 48 | 2,0 | oui |
| | | $H_2SO_4$ | 0,61 | 224 | 0 | | | non |
| | | | 1,50 | 153 | 0 | | | non |
| | | | 1,50 | 149 | 0 | | | oui |
| 26,6 | 29,3 | HCl | 0,61 | 74 | 0 | 33 | 1,85 | non |
| | | | 1,50 | 24 | 0 | 40 | 1,85 | non |
| | | $H_2SO_4$ | 0,61 | 150 | 0 | 36 | 1,37 | non |
| | | | 1,50 | 134 | 0 | 33 | 2,10 | non |

\+ en meq/g de polymère sec

\+ + "oui" signifie qu'une post-neutralisation a été effectuée, c'est-à-dire que le pH de la solution de terpolymère à 20% a été ramené à 7 après le traitement à chaud en présence d'un acide.

(1) post-neutralisation.

**Tableau V**

Compositions typiques de laitiers contenant des retardateurs de prise. Toutes les conditions d'essais sont identiques à celles du tableau III. Le traitement thermique de la solution de terpolymère à 20% a été effectué à 60°C pendant 168 h avec 1,5 meq HCl/g de terpolymère sec.

| DS80 (1/t) | Terpolymère (solution à 20%) (1/t) | Retardateur Type + | Retardateur Concentration (1/t) | Filtrat (ml/30 min) | Eau libre (ml/150 ml) | Rhéologie P.V. (cP) | Rhéologie Y.V. (g/100 $cm^2$) |
|---|---|---|---|---|---|---|---|
| 8,88 | 14,7 | aucun | 0 | 94 | 0,5 | 28 | 1,37 |
| | 29,3 | aucun | 0 | 40 | 0 | 46 | 2,44 |
| 13,3 | 22,2 | aucun | 0 | 54 | 0 | 36 | 0,88 |
| 13,3 | 22,2 | L | 4,44 | 56 | 2 | 45 | 2,44 |
| | | G | 4,44 | 96 | 2 | 32 | 0,39 |

\+ L = retardateur du type lignosulfonate
G = retardeteur du type glucoheptonate.

**Tableau VI**

Compositions typiques de laitiers.
Toutes les conditions d'essai sont identiques à celles des tableaux III et V, sauf en ce que la température d'essai du laitier est de 29,4°C.

| DS80 (1/t) | Terpolymère (solution à 20%) (1/t) | Filtrat (ml/30 min) | Eau libre (ml/150 ml) | Rhéologie P.V. (cP) | Rhéologie Y.V. (g/100 $cm^2$) |
|---|---|---|---|---|---|
| 8,88 | 7,10 | 192 | 0 | 30 | 1,66 |
| | 14,7 | 80 | 0 | 41 | 2,44 |
| 17,76 | 7,10 | 32 | 0 | 27 | 0,0 |
| | 14,7 | 34 | 1,5 | 69 | 0,585 |
| 13,32 | 11,10 | 54 | 0 | 36 | 0,68 |

**Tableau VII**

Essais à 85° C effectués en utilisant divers systèmes salins comme eau de mélange.

La solution de terpolymère à 20% a été traitée à 60°C durant 288 h en présence de 1,5 meq HCl/g de terpolymère sec.

Toutes les densités de laitiers sont égales à 1,80 g/cm³.

| Ciment | Eau de mélange % (1) | Teneur en sel dans l'eau de mélange % (2) | DS80 (l/t) | Solution de terpolymère (l/t) | Filtrat (ml/30 min) | Eau libre (ml/150 ml) | Rhéologie P.V. (cP) | Y.V. (g/100 cm²) |
|---|---|---|---|---|---|---|---|---|
| CEMOIL | 46,5 | SW | 17,76 | 29,3 | 68 | 0 | 35 | 1,76 |
| CLASSE G | 50,5 | NaCl;18 | 17,76 | 29,3 | 116 | 0 | 47 | 2,59 |
| | 56,6 | NaCl;36 | 0 | 15,5 | 58 | 0 | 58 | 15,27 |
| DYCKER-HOFF CLASSE G | 46,5 | SW | 17,76 | 29,3 | 52 | 2 | 33 | 0,0 |

SW = eau de mer préparée selon la norme ASTM n° D 1141-75

% (1) = % par poids de ciment

% (2) = % par poids d'eau

**Tableau VIII**

Epaississement de laitiers préparés avec un ciment CEMOIL classe G, de l'eau douce et 17,76 l/t de ciment de dispersant DS 80.

La solution de terpolymère à 20% a été traitée à 60°C durant 168 h en présence de 1,5 meq HCl/g de terpolymère sec.

La norme utilisée est API 10 (7 g 5)

| Solution de terpolymère | Post-neutralisation + | Temps d'épaississement (h:min) |
|---|---|---|
| 0 | - | 1:30 |
| 0,33 | non | 2:30 |
| 0,33 | oui | 2:10 |

+ cf. note (+ +) du tableau IV.

**Revendications**

1. Additif de contrôle du filtrat pour compositions de ciment, caractérisé en ce qu'il consiste en le produit du traitement à chaud en présence d'au moins un acide d'une solution aqueuse d'au moins un terpolymère constitué des fractions monomères suivantes:

I.

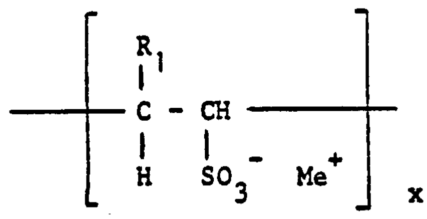

II.

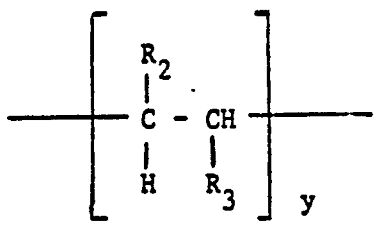

III.

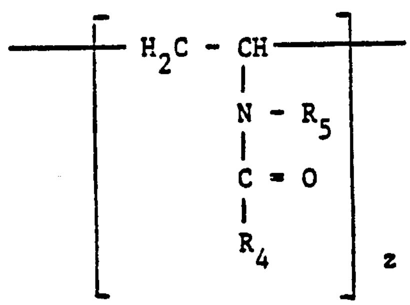

dans lesquelles $R_1$ et $R_2$ représentent H ou $CH_3$, $R_3$ représente $CONH_2$, CN ou $COOCH_3$, $R_4$ représente H, $CH_3$ ou $C_2H_5$ et $R_5$ représente $CH_3$ ou $C_2H_5$, ou bien $R_4$ et $R_5$ forment ensemble un groupe propylène formant avec le groupe NCO un radical pyrrolidone, le cation de compensation de la charge $Me^+$ étant choisi parmi $NH_4^+$, $K^+$, $Na^+$ ou $Li^+$ et les parties en poids des monomères de départ, x, y et z respectivement pour les formules I, II et III sont respectivement comprises entre 5 et 50, 25 et 92, et 3 et 70, et en ce que les trios paramètres principaux dudit traitement son les suivants:

- temperature: 60 à 200° C;
- durée: de 2 semaines à 1h, en fonction de la temperature;
- concentration en acide: env. 0,10 à env. 5,0 meq. d'acide/g de terpolymère sec.

2. Additif selon la revendication 1, caractérisé en ce que l'acide est l'acide chlorhydrique.

3. Additif selon la revendication 1, caractérisé en ce que l'acide est l'acide sulfurique.

4. Additif selon l'une quelconque des revendications 1 à 3, caractérisé en ce que la proportion d'acide de traitement est d'environ 1,5 meq/g de terpolymère sec.

5. Additif selon l'une quelconque des revendications 1 à 4, caractérisé en ce que la durée et la température du traitement thermique sont respectivement de 4 à 8 heures et 100° C.

6. Additif selon l'une quelconque des revendications 1 à 5, caractérisé en ce que le terpolymère de départ est utilisé sous forme d'une solution aqueuse à 5-40, de préférence 20 % en poids de terpolymère sec.

7. Additif selon l'une quelconque des revendications 1 à 6, caractérisé en ce qu'il est de plus post-neutralisé à pH 7.

8. Procédé de préparation des additifs selon l'une quelconque des revendications 1 à 7, caractérisé en ce que l'on chauffe en présence d'un acide tel que HCl ou $H_2SO_4$ une solution aqueuse à environ 5-40 % en poids sec, de préférence environ 20 %, d'au moins un terpolymère tel que défini dans la revendication 1, et en ce que la durée et la température du traitement thermique sont respectivement de 1 heure à 2 semaines et de 60 à 200° C, de préférence 4 à 8 heures et 100° C.

9. Compositions de laitiers de ciment pour cimentation de puits, notamment de puits pétroliers et de puits de gaz, caractérisées en ce qu'elles contiennent un additif selon l'une quelconque des revendications 1 à 7.

10. Compositions selon la revendication 9, caractérisées en ce que la proportion d'additif employée correspond à une proportion d'environ 0,05 à environ 2 %, de préférence d'environ 0,1 à 1 %, par poids de ciment, de AHTT (terpolymère traité à chaud par l'acide) sec.

11. Procédé de cimentation de l'annulaire d'un puits, notamment de pétrole ou de gaz, caractérisé en ce que l'on injecte une composition de cimentation selon la revendication 9 ou 10.

**Patentansprüche**

1. Filtratsteuerzusatz für Zementzusammensetzungen, dadurch gekennzeichnet, daß er aus einem Wärmebehandlungsprodukt in Gegenwart von mindestens einer Säure einer wässrigen Lösung mindestens eines Terpolymers besteht, zusammengesetzt aus den folgenden monomeren Anteilen:

I.

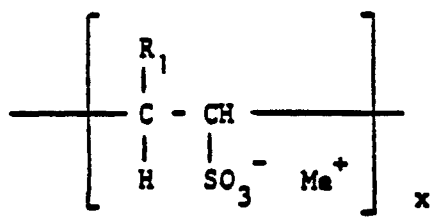

II.

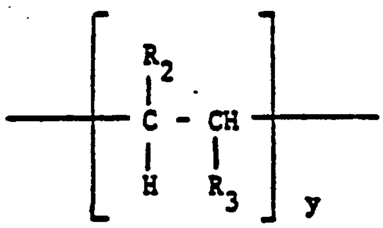

III.

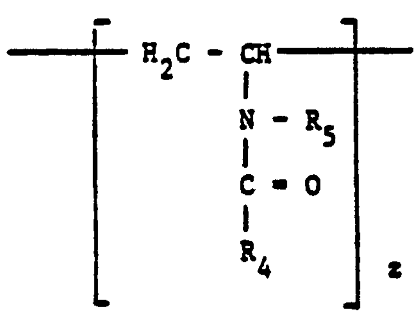

worin $R_1$ und $R_2$ H oder $CH_3$ repräsentieren, $R_3$ $CONH_2$, CN oder $COOCH_3$ repräsentiert, $R_4$ H, $CH_3$ oder $C_2H_5$ repräsentiert und $R_5$ $CH_3$ oder $C_2H_5$ repräsentiert, oder auch $R_4$ und $R_5$ gemeinsam eine Propylengruppe bilden, die mit der NCO-Gruppe ein Pyrrolidonradikal bildet, wobei das Kompensationskation der Ladung $Me^+$ unter $NH_4^+$, $K^+$, $Na^+$ oder $Li^+$ gewählt wird und die Gewichtsanteile der Ausgangsmonomere x, y bzw. z für die Formeln I, II bzw. III zwischen 5 und 50 bzw. 25 und 92 bzw. 3 und 70 liegen, und daß die drei Hauptparameter der genannten Behandlung die folgenden sind:

- Temperatur 60 bis 200° C,
- Dauer von zwei Wochen bis eine Stunde in Abhängigkeit von der Temperatur,
- Säurekonzentration: etwa 0,1 bis etwa 5,0 meq. Säure/g trockenem Terpolymer.

2. Filtratsteuerzusatz nach Anspruch 1, dadurch gekennzeichnet, daß die Säure Chlorwasserstoffsäure ist.

3. Filtratsteuerzusatz nach Anspruch 1, dadurch gekennzeichnet, daß die Säure Schwefelsäure ist.

4. Filtratsteuerzusatz nach einem der Ansprüche 1 bis 3, dadurch gekennzeichnet, daß der Säurebehandlungsanteil etwa 1,5 meq/g des trockenen Terpolymers beträgt.

5. Filtratsteuerzusatz nach einem der Ansprüche 1 bis 4, dadurch gekennzeichnet, daß die Dauer und die Temperatur der thermischen Behandlung 4 bis 8 Stunden und 100° C betragen.

6. Filtratsteuerzusatz nach einem der Ansprüche 1 bis 5, dadurch gekennzeichnet, daß der Ausgangsterpolymer in Form einer wässrigen Lösung mit 5 bis 40, vorzugsweise 20 Gew.-% trockenen Terpolymers verwendet wird.

7. Filtratsteuerzusatz nach einem der Ansprüche 1 bis 6, dadurch gekennzeichnet, daß er zusätzlich bei pH 7 postneutralisiert wird.

8. Verfahren zum Herstellen des Zusatzes nach einem der Ansprüche 1 bis 7, dadurch gekennzeichnet, daß man in Gegenwart einer Säure, wie HCl oder $H_2SO_4$ eine wässrige Lösung mit etwa 5 bis 40 Gew.-% Trockenmasse, vorzugsweise etwa 20 %, mindestens eines Terpolymers wie in Anspruch 1 definiert erhitzt und daß die Dauer und die Temperatur der thermischen Behandlung eine Stunde bis zwei Wochen und 60 bis 200° C, vorzugsweise 4 bis 8 Stunden und 100° C betragen.

9. Zementklinkerzusammensetzung für die Zementierung von Bohrlöchern, insbesondere Ölbohrlöchern und Gasbohrlöchern, dadurch gekennzeichnet, daß sie einen Zusatz gemäß einem der Ansprüche 1 bis 7 enthält.

10. Zusammensetzung nach Anspruch 9, dadurch gekennzeichnet, daß der Anteil an verwendetem Zusatz einem Anteil von etwa 0,05 bis etwa 2 % entspricht, vorzugsweise etwa 0,1 bis 1 % an trockenem AHTT (warmsäurebehandeltem Terpolymer) pro Zementgewichtseinheit.

11. Verfahren zur Zementierung des Ringraums eines Bohrlochs, insbesondere für Erdöl oder Gas, dadurch gekennzeichnet, daß man eine Zementzusammensetzung nach Anspruch 9 oder 10 injiziert.

**Claims**

1. A fluid loss control additive for cement compositions, characterized in that it consists of the product of the hot treatment in the presence of at least one acid of an aqueous solution of at least one terpolymer consisting of the following monomer components:

I.

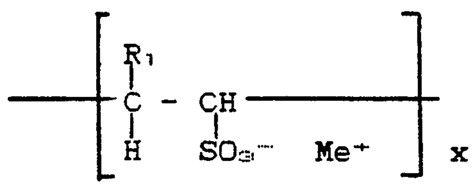

II.

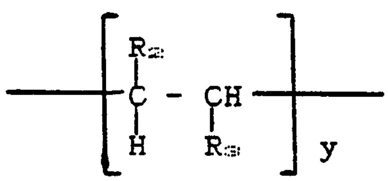

III.

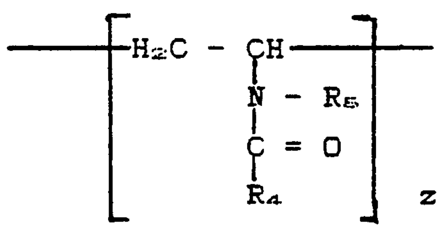

in which $R_1$ and $R_2$ represent H or $CH_3$, $R_3$ represents $CONH_2$, CN er $COOCH_3$, $R_4$ represents H, $CH_3$ er $C_2H_5$ and $R_5$ represents $CH_3$ or $C_2H_5$, or $R_4$ and $R_5$ together form a propylene group forming with the NCO group a pyrrolidone group, the compensating cation of the charge Me+ being selected from among $NH_4^+$, $K^+$, $Na^+$ or $Li^+$ and the parts by weight of the original monomers, x, y and z respectively for the formulae I, II and III, respectively between 5 and 50, 25 and 92, and 3 and 70, and in that the three main parameters of the said treatment are as follows:

- temperature: 60 to 200° C,
- duration: from 2 weeks to 1 hour depending on the temperature,
- acid concentration: from approximately 0.1 to approximately 5.0 meq. of acid/g. of dry terpolymer.

2. An additive according to claim 1, characterized in that the acid is hydrochloric acid.

3. An additive according to claim 1, characterized in that the acid is sulphuric acid.

4. An additive according to any one of claims 1 to 3, characterized in that the proportion of treatment acid is approximately 1.5 meq/g of dry terpolymer.

5. An additive according to any one of claims 1 to 4, characterized in that the duration and temperature of the heat treatment are respectively from 4 to 8 hours and 100° C.

6. An additive according to any one of claims 1 to 5, characterized in that the original terpolymer is used in the form of an aqueous solution of from 5 - 40 % and preferably 20 % by weight of dry terpolymer.

7. An additive according to any one of claims 1 to 6, characterized in that it is additionally postneutralized to pH7.

8. A process for preparing the additives according to any one of claims 1 to 7, characterized in that there is heated in the presence of an acid such as HCl or $H_2SO_4$ an aqueous solution of approximately 5 - 40 % by dry weight, preferably approximately 20%, of at least one terpolymer such as that defined in claim 1, and in that

the duration and the temperature of the heat treatment are respectively from 1 hour to 2 weeks and from 60 to 200° C, preferably from 4 to 8 hours and 100° C.

9. Cement slag compositions for the cementation of wells, especially oil wells and gas wells, characterized in that they contain an additive according to any one of claims 1 to 7.

10. Compositions according to claim 9, characterized in that the proportion of additive used corresponds to a proportion of from approximately 0.05 to approximately 2 %, preferably from approximately 0.1 to 1 %, by weight of cement, of dry AHTT (acid heat-treated terpolymer).

11. A process for the cementation of the annulus of a well, especially an oil or gas well, characterized in that a cementing composition according to claim 9 or claim 10 is injected therein.